# EUROPEAN PATENT SPECIFICATION

(11) **EP 4 083 886 B1**
(45) Date of publication and mention of the grant of the patent: **05.11.2025**
(21) Application number: 22164336.4
(22) Date of filing: 25.03.2022
(51) Int. Cl.: G06Q 10/10

(54) **INFORMATION MANAGEMENT SYSTEM, INFORMATION MANAGEMENT METHOD, AND INFORMATION MANAGEMENT PROGRAM**
INFORMATIONSVERWALTUNGSSYSTEM, INFORMATIONSVERWALTUNGSVERFAHREN UND INFORMATIONSVERWALTUNGSPROGRAMM
SYSTÈME DE GESTION D'INFORMATIONS, PROCÉDÉ DE GESTION D'INFORMATIONS ET PROGRAMME DE GESTION D'INFORMATIONS

(30) Priority: 30.04.2021 JP 2021077452
(43) Date of publication of application: 02.11.2022
(73) Proprietor: OMRON Corporation, Shiokoji-dori, Shimogyo-Ku Kyoto-shi Kyoto 600-8530 (JP)
(72) Inventor: INAMOTO, Shuji, Kyoto-shi, 600-8530 (JP); UEYAMA, Yuki, Kyoto-shi, 600-8530 (JP); SAKATANI, Nobuyuki, Kyoto-shi, 600-8530 (JP); ABE, Yasuaki, Kyoto-shi, 600-8530 (JP); KATAOKA, Hitoshi, Kyoto-shi, 600-8530 (JP)
(74) Representative: Mewburn Ellis LLP

(56) References cited:
- US-A1- 2015 142 676

## Description

### BACKGROUND OF THE INVENTION

### Field of the Invention

The present invention relates to an information management system, an information management method, and an information management program.

### Description of the Background Art

With development of information and communication technology, a flow of digitization that precedes at a design site is also progressing at a production site. More specifically, information management technology for a component, a process, and equipment (lines) such as a bill of materials (BOM), a bill of process (BOP), and a bill of equipment (BOE) have been introduced.

In the future, it is assumed that a cyber-physical system (CPS) or the like in which design information and information about production apparatuses and workers are digitized becomes widespread in order to flexibly respond to a change in a production target and the like.

For example, WO 2018/079185 discloses a technology that integrates an entire product life cycle of planning, design, production (manufacturing), operation, use, and maintenance of products, and integrates manufacturing management of manufacturing orders from a manufacturing site in real time.

As a factor that hinders digitalization at the production site as described above, it is difficult to reliably reflect a content of an improvement activity (for example, adjustment or change of a production engineer with respect to a line or a device) daily performed at the production site on managed information. Consequently, a problem that the information cannot be properly synchronized between the information management system (cyber-physical) and the actual production site (physical) may be generated.

US2015/142676 discloses a review management system/content management system (RMS/CMS system) that manages the collection and review of blocks of unreviewed authored content by original equipment manufacturer (OEM) designated reviewers. OEM designated reviewers are able to edit and add comments that are logically associated by the RMS/CMS system with a block of unreviewed authored content. The RMS/CMS system logically associates each block of approved authored content with one or more topics included in the documentation that accompanies an OEM produced vehicle. The RMS/CMS system receives or otherwise accesses a bill of materials (BOM) associated with a vehicle and selects blocks of approved authored content for inclusion in the documentation accompanying the respective vehicle. The RMS/CMS system selects system blocks of approved authored content based on topics identified by the systems and components included on the BOM associated with the vehicle. The RMS/CMS system generates the documentation using OEM specific templates.

### SUMMARY OF THE INVENTION

The present invention provides a mechanism capable of reliably reflecting information about a production site in information managed in a database.

An information management system according to an embodiment of the present invention includes a storage unit configured to store a database including a bill of materials, a bill of process, and a bill of equipment. Each of the bill of materials, the bill of process, and the bill of equipment includes designation of an approver for included information. An information management system includes: a search module configured to search an item corresponding to a change content that is a content of a change from the database in response to generation of a change to a production site or generation of a change to be reflected in the production site, and search the approver of the searched item; an approval request module configured to request the searched approver to approve the reflection of the change content in the database; and an update module configured to reflect the change content in a corresponding item of the database in response to the approval from the approver.

According to this configuration, when the change to the production site is generated or when the change to be reflected to the production site is generated, the information management system searches requirement of the reflection in the database and the approver for the reflection, so that the information about the production site can be more reliably reflected in the information managed by the database.

The change to the production site may include the change content performed to control device of the production site. According to this configuration, when an engineer changes a parameter or the like of the control device as part of a daily improvement activity, the change content of the parameter can be reflected in the database.

The information management system may further include an evaluation module configured to evaluate whether the setting value included in the database is valid based on actual production of the production site. According to this configuration, when the change in the current setting value is required based on the actual production of the production site, not only the production site but also the information managed by the database can be changed.

The change to be reflected in the production site may be generated in response to the evaluation that the setting value included in the database is invalid. According to this configuration, the change is performed when the setting value included in the database is invalid, the generation of an unnecessary change can be avoided.

The information management system may further include an estimation module configured to estimate a tendency generated in the production site based on the actual production of the production site. The generation of the change to be reflected in the production site may be determined based on the tendency generated in the production site. According to this configuration, the setting value and the like can be changed based on future prediction instead of the current actual production of the production site, so that more effective improvement can be expected.

The information management system may further include a simulation module configured to perform a simulation on the production site using a model included in the database. The generation of the change to be reflected in the production site may be determined based on a simulation result by the simulation module. According to this configuration, even before production at the production site is started, the change to be reflected in the production site can be found.

The update module may record a log related to the change content in response to the disapproval from the approver. According to this configuration, the change content that is not approved by the approver can be more reliably recorded.

The storage unit may store a second database in addition to the database. The change to the production site or the change to be reflected in the production site may be temporarily reflected in the second database, and reflected from the second database in response to the approval from the approver. According to this configuration, using the second database, the change content can be temporarily managed in a period until the approval from the approver is obtained. In addition, even when the approval is not obtained from the approver, a situation in which the database is erroneously changed can be avoided.

The information management system may further include a display unit to display a user interface screen in order to receive the approval from the approver. The user interface screen may include the change content in which the approval is requested. According to this configuration, the approver can determine whether to approve the change after more appropriately understanding the change content in which the approval is requested.

An information management method according to another embodiment of the present invention includes storing a database including a bill of materials, a bill of process, and a bill of equipment in a storage unit. Each of the bill of materials, the bill of process, and the bill of equipment includes designation of an approver for included information. The information management method includes: searching an item corresponding to a change content that is a content of a change from the database in response to generation of a change to a production site or generation of a change to be reflected in the production site, and search the approver of the searched item; requesting the searched approver to approve the reflection of the change content in the database; and reflecting the change content in a corresponding item of the database in response to the approval from the approver.

According to still another embodiment of the present invention, there is provided an information management program causing a computer to perform an information management method. The computer includes a storage unit to store a database including a bill of materials, a bill of process, and a bill of equipment, and each of the bill of materials, the bill of process, and the bill of equipment includes designation of an approver for included information. The information management program includes: searching an item corresponding to a change content that is a content of a change from the database in response to generation of a change to a production site or generation of a change to be reflected in the production site, and search the approver of the searched item; requesting the searched approver to approve the reflection of the change content in the database; and reflecting the change content in a corresponding item of the database in response to the approval from the approver.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram illustrating an outline of an information management system of the embodiment.
Fig. 2 is a schematic diagram illustrating a system configuration example of the information management system of the embodiment.
Fig. 3 is a block diagram illustrating a hardware configuration example of a management device of the embodiment.
Fig. 4 is a block diagram illustrating a hardware configuration example of a control device of the embodiment.
Fig. 5 is a schematic diagram illustrating an example of an integrated management database in the information management system of the embodiment.
Fig. 6 is a schematic diagram illustrating an example of a relationship between the integrated management database in the information management system of the embodiment and a designer (approver).
Fig. 7 is a sequence diagram illustrating an example of a processing procedure in the information management system of the embodiment.
Fig. 8 is a schematic diagram illustrating an example of a user interface screen presented to an approver in the information management system of the embodiment.
Fig. 9 is a schematic diagram illustrating change processing based on actual production in the information management system of the embodiment.
Fig. 10 is a sequence diagram illustrating another example of the processing procedure in the information management system of the embodiment.
Fig. 11 is a flowchart illustrating an example of a processing content for determining a change content based on the actual production in the information management system of the embodiment.
Fig. 12 is a schematic diagram illustrating change processing based on a simulation result in the information management system of the embodiment.
Fig. 13 is a sequence diagram illustrating still another example of the processing procedure in the information management system of the embodiment.
Fig. 14 is a schematic diagram illustrating the change processing based on a difference between a simulation result and the actual production in the information management system of the embodiment.
Fig. 15 is a sequence diagram illustrating still another example of the processing procedure in the information management system of the embodiment.
Fig. 16 is a view illustrating an example of a method for updating an integrated management database in the information management system of the embodiment.
Fig. 17 is a view illustrating an example of a method for searching the approver in the information management system of the embodiment.

### DESCRIPTION OF THE PREFERRED EMBODIMENTS

With reference to the drawings, an embodiment of the present invention will be described in detail. The same or equivalent portion in the drawings is denoted by the same reference numeral, and the description will not be repeated.

### <A. Application example>

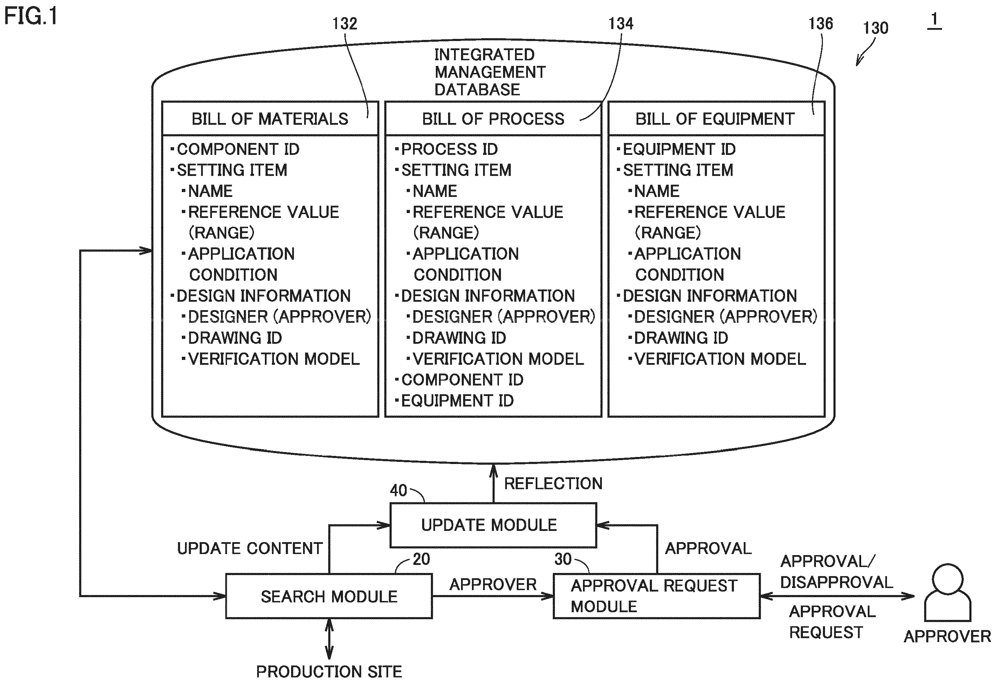

An example of an entire configuration of an information management system 1 of the embodiment will be described. Fig. 1 is a schematic diagram illustrating an outline of information management system 1 of the embodiment.

With reference to Fig. 1, information management system 1 includes an integrated management database 130 including a bill of materials 132 corresponding to the BOM, a bill of process 134 corresponding to the BOP, and a bill of equipment 136 corresponding to the BOE. Each of bill of materials 132, bill of process 134, and bill of equipment 136 includes designation of an approver for the included information.

Information management system 1 includes a search module 20, an approval request module 30, and an update module 40.

Search module 20 searches an item corresponding to a change content that is the content of the change from integrated management database 130 in response to the generation of the change to the production site or the generation of the change to be reflected in the production site. Further, search module 20 searches the approver of the searched item.

Approval request module 30 requests the approver searched by search module 20 to approve the reflection of the change content in integrated management database 130.

**In** response to the approval from the approver, update module 40 reflects the change in the corresponding item in integrated management database 130.

With such a series of processing procedures, the information about the production site can be more reliably reflected in the information managed by the database.

### <B. System configuration example of information management system 1>

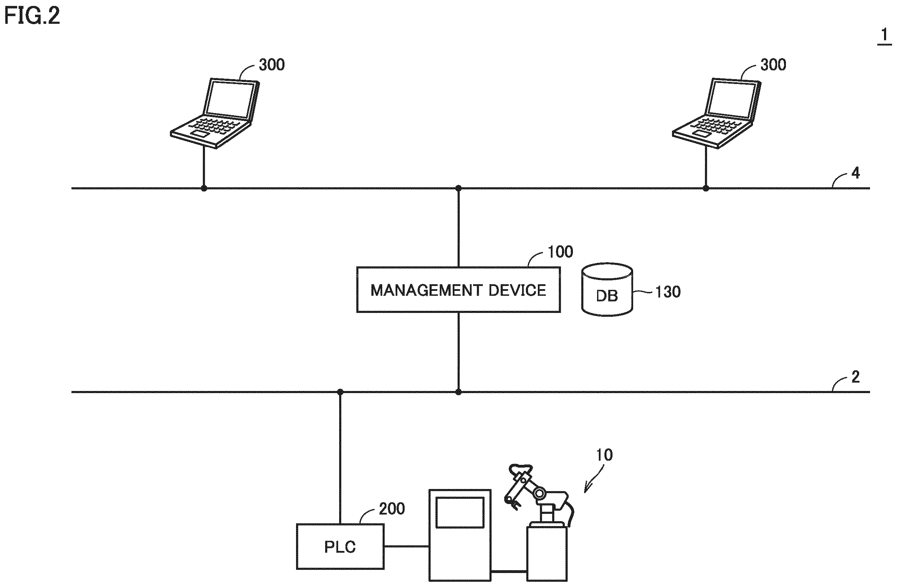

Fig. 2 is a schematic diagram illustrating a system configuration example of information management system 1 of the embodiment. With reference to Fig. 2, information management system 1 includes a management device 100, a control device 200, and one or a plurality of information processing devices 300.

Management device 100 and control device 200 are connected to each other through a network 2. Management device 100 and one or the plurality of information processing devices 300 are connected to each other through a network 4.

Management device 100 includes an integrated management database 130. Integrated management database 130 stores information managing production.

Control device 200 is typically configured by a programmable logic controller (PLC) or the like, and is in charge of controlling production equipment 10.

Information processing device 300 is typically a general-purpose computer, and is in charge of providing information, accepting approval, and the like as described later.

### <C. Hardware configuration example of information management system 1>

### (c1: Management device 100)

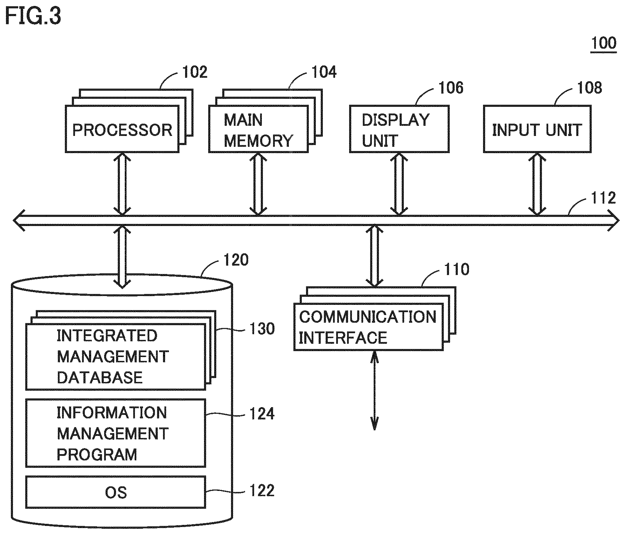

Fig. 3 is a block diagram illustrating a hardware configuration example of management device 100 of the embodiment. With reference to Fig. 3, management device 100 is an example of a computer, and includes one or a plurality of processors 102, one or a plurality of main memories 104, a display unit 106, an input unit 108, one or a plurality of communication interfaces 110, and a storage 120. These components are connected to each other through a processor bus 112.

Processor 102 is configured by a central processing unit (CPU), a micro-processing unit (MPU), a graphical processing unit (GPU), and the like, reads an information management program 124 stored in storage 120 that is an example of the non-transitory storage medium, expands information management program 124 in main memory 104, and executes information management program 124, thereby implementing processing related to later-described information management. That is, information management program 124 is stored in the non-transitory storage medium, and causes management device 100, which is the computer, to execute the information management method of the embodiment.

Display unit 106 is configured by a liquid crystal display or the like, and displays a processing result by processor 102. Input unit 108 is configured by a keyboard, a mouse, and the like, and receives a user operation. Communication interface 110 exchanges data with an arbitrary device.

Storage 120 is configured by a hard disk drive (HDD), a solid state drive (SSD), or the like, and is a storage unit that stores, for example, an OS 122, information management program 124, and a data set corresponding to integrated management database 130.

Although the configuration example in which necessary functions are provided by processor 102 executing information management program 124 has been illustrated in Fig. 3, some or all of these provided functions may be implemented using a dedicated hard-wired circuit (for example, an application specific integrated circuit (ASIC) and a field-programmable gate array (FPGA)). That is, the processing executed by management device 100 and the function provided by management device 100 may be implemented by processing circuitry including the processor, the ASIC, and the FPGA.

Furthermore, a plurality of management devices 100 may be distributed to implement later-described processing, and any hardware resource may be adopted as the hardware resource that implements information management system 1.

### (c2: Control device 200)

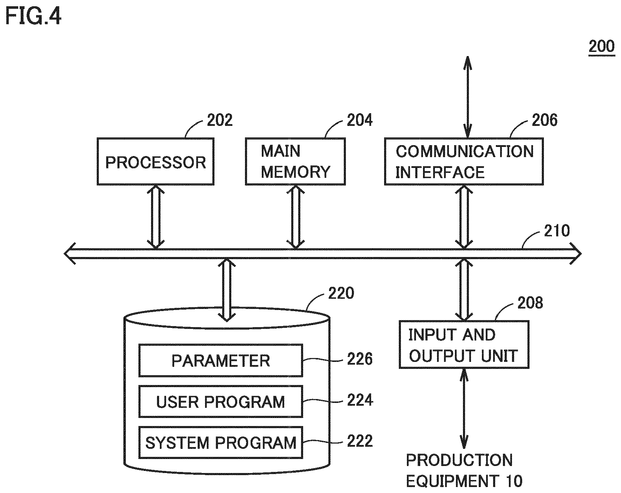

Fig. 4 is a block diagram illustrating a hardware configuration example of control device 200 of the embodiment. With reference to Fig. 4, control device 200 is an example of the computer, and includes a processor 202, a main memory 204, a communication interface 206, an input and output unit 208, and a storage 220. These components are connected to each other through a processor bus 210.

Processor 202 is constructed with a CPU, a MPU, a GPU, and the like, reads various programs stored in storage 220, expands the program in main memory 204, and executes the program, thereby implementing processing as control device 200.

Communication interface 206 is in charge of data communication with management device 100.

Input and output unit 208 is in charge of exchanging a signal with production equipment 10.

Typically, storage 220 stores a system program 222 implementing basic processing of control device 200, a user program 224 controlling production equipment 10, and a parameter 226 including a setting referred to in processing in user program 224.

Although the configuration example in which the required functions are provided by processor 202 executing the program has been illustrated in Fig. 4, some or all of these provided functions may be implemented using a dedicated hard-wired circuit (for example, the ASIC or the FPGA).

### (c3: Information processing device 300)

Information processing device 300 of the embodiment can also be implemented using a general-purpose computer similar to management device 100 in Fig. 3.

### <D. Integrated management database 130>

Integrated management database 130 will be described in detail below.

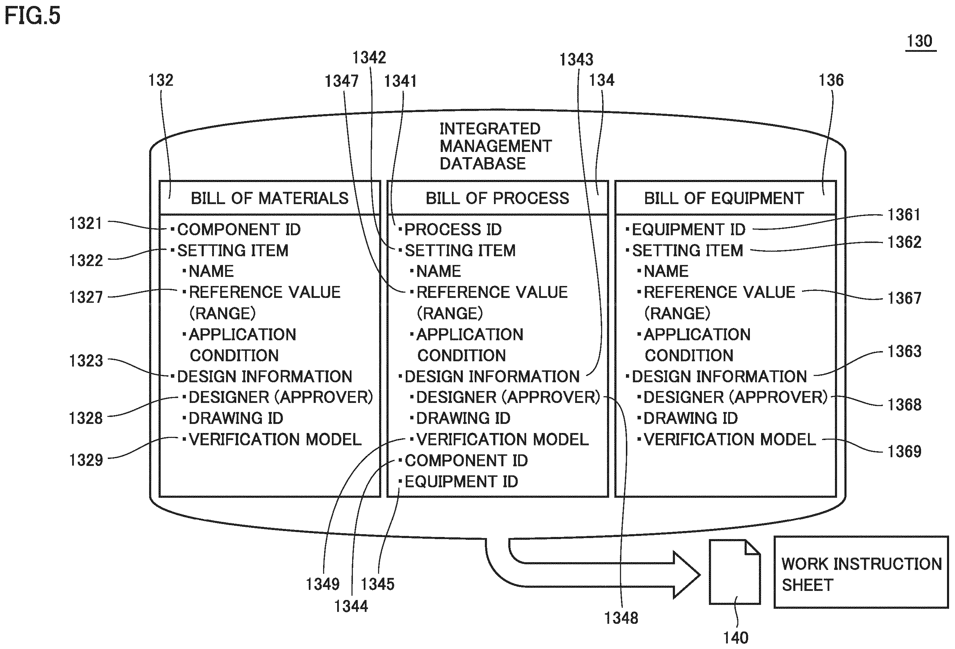

Fig. 5 is a schematic diagram illustrating an example of integrated management database 130 in information management system 1 of the embodiment. With reference to Fig. 5, integrated management database 130 includes bill of materials 132 corresponding to the BOM, bill of process 134 corresponding to the BOP, and bill of equipment 136 corresponding to the BOE.

Bill of materials 132 includes information about components constituting a product, and for example, includes a component ID 1321 specifying each component, a setting item 1322 including information appropriately set for each component, and design information 1323 including information about the design of each component.

Bill of process 134 includes information about a process for producing the product, and for example, includes a process ID 1341 specifying each process, a setting item 1342 including information appropriately set for each process, design information 1343 including information about the design of each process, a component ID 1344 specifying one or a plurality of components used, and an equipment ID 1345 specifying one or a plurality of pieces of equipment used.

Bill of equipment 136 includes information about equipment producing the product, and for example, includes an equipment ID 1361 specifying each piece of equipment, a setting item 1362 including information appropriately set for each piece of equipment, and design information 1363 including information about the design of each piece of equipment.

A series of information required for the production of the product can be managed using the above-described three types of tables. A work instruction sheet 140 for a worker may be generated using the three types of tables.

Each of bill of materials 132, bill of process 134, and bill of equipment 136 includes setting items (setting items 1322, 1342, 1362) that can be arbitrarily changed. These setting items include reference values (reference values 1327, 1347, 1367) in addition to names. Normally, the reference value is defined as a reference range having a predetermined width in consideration of variations and the like.

In addition, each of bill of materials 132, bill of process 134, and bill of equipment 136 includes design information (design information 1323, 1343, 1363) that is information about the design. These pieces of design information include the designer (designers 1328, 1348, 1368) and the verification model (verification models 1329, 1349, 1369). Furthermore, each piece of the design information may include a drawing ID specifying a target drawing. The designer included in the design information may also be the approver for the corresponding information. As described above, each of bill of materials 132, bill of process 134, and bill of equipment 136 includes designation of the approver for the included information.

Generally, the information included in integrated management database 130 is managed by a different designer or approver.

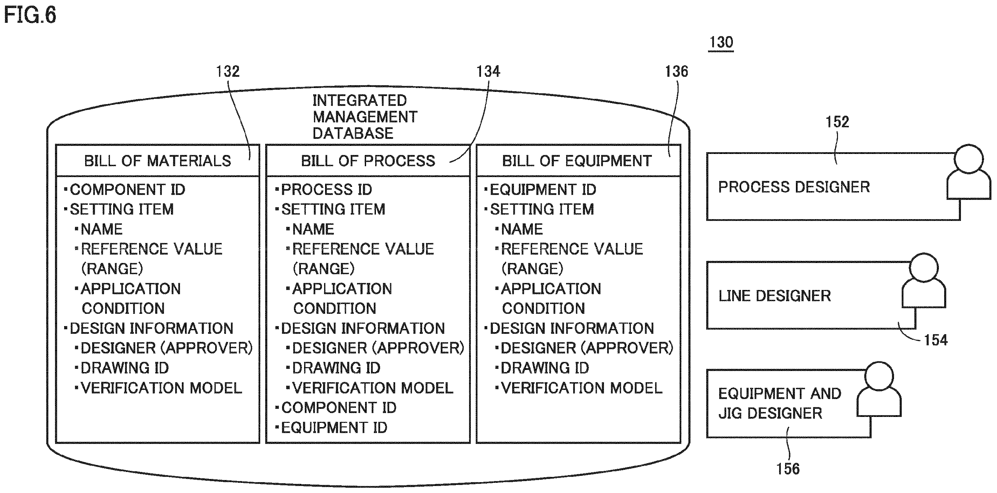

Fig. 6 is a schematic diagram illustrating an example of a relationship between integrated management database 130 in information management system 1 of the embodiment and the designer (approver). With reference to Fig. 6, a process designer 152, a line designer 154, and an equipment and jig designer 156 can be involved in bill of materials 132, bill of process 134, and bill of equipment 136 that are included in integrated management database 130.

Process designer 152 is a technician responsible for designing the process, line designer 154 is a technician responsible for designing the line, and equipment and jig designer 156 is a technician responsible for designing the equipment and jigs included in the line.

The division is not limited to the division of the designer in Fig. 6, but any division can be performed according to a scale of an organization. In addition, even when the tasks are divided for each task, the same technician may take charge of a plurality of tasks.

Bill of materials 132, bill of process 134, and bill of equipment 136 include information about designers (designers 1328, 1348, 1368), and changes, updates, and the like of information included in integrated management database 130 need to be approved by the corresponding designer (or the approver).

### <E. Synchronization between production site and integrated management database 130>

Some processing examples implementing synchronization between the production site and integrated management database 130 will be described.

For example, a person in charge of production technology or a manufacturing manager change and adjust pieces of equipment and lines at the production site in order to achieve targets such as improvement of production capacity and reduction of a defect rate. Examples of the change and adjustment include a change in a work order, a change in an equipment and a jig to be used, a change in an operator, and a change in a device parameter.

Information management system 1 of the embodiment can easily reflect the change content in the production site in integrated management database 130.

### (e1: Reflection of change content by technician)

First, a processing example of the reflection of the change content by a technician such as a person in charge of the production technology or a manufacturing manager in integrated management database 130 will be described.

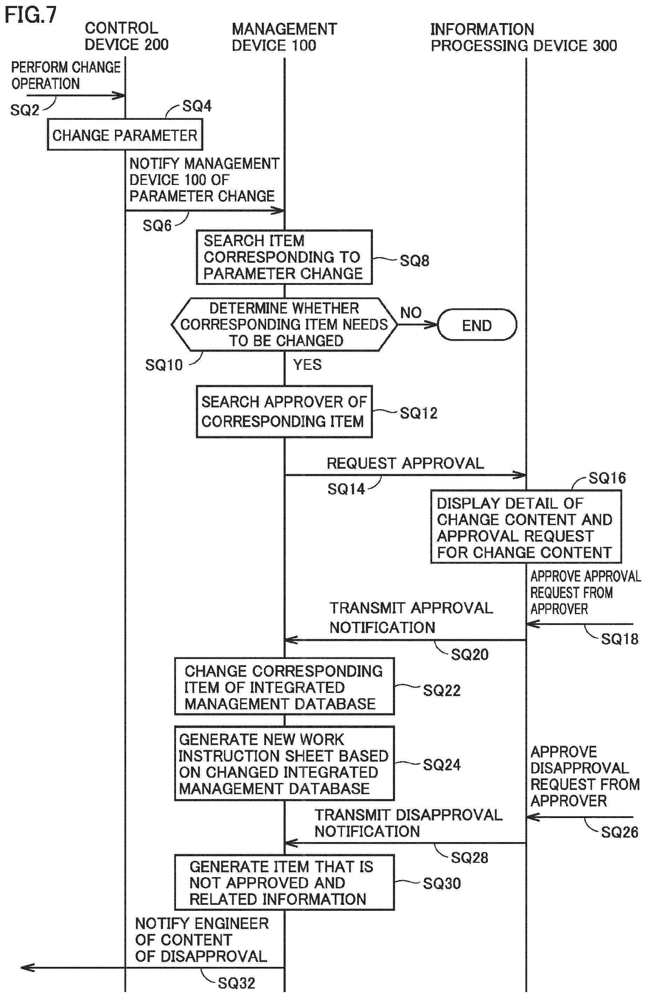

Fig. 7 is a sequence diagram illustrating an example of a processing procedure in information management system 1 of the embodiment. The processing procedure in Fig. 7 is executed by the technician who changes and adjusts the equipment and line at the production site and the approver (designer) related to the change and adjustment in addition to management device 100, control device 200, and information processing device 300.

With reference to Fig. 7, the engineer performs an arbitrary change operation on the production site (sequence SQ2). Control device 200 changes the parameter according to the change operation by the engineer (sequence SQ4). Examples of the changing operation include a change in a setting value of screw tightening torque.

Control device 200 notifies management device 100 of the parameter change (sequence SQ6). Management device 100 refers to integrated management database 130 to search the item corresponding to the notified parameter change (sequence SQ8). Then, integrated management database 130 determines whether the corresponding item needs to be changed (sequence SQ10).

More specifically, management device 100 searches the setting items (setting items 1322, 1342, 1362) corresponding to the notified parameter from bill of materials 132, bill of process 134, and bill of equipment 136. When the corresponding setting item is not found, management device 100 determines that the change in the corresponding item is not required. On the other hand, when the corresponding setting item is found, management device 100 determines whether the value of the changed parameter deviates from the reference value (or the reference range) included in the setting item.

When the value of the changed parameter does not deviation from the reference value (or the reference range), management device 100 determines that the change in the corresponding item is not required. On the other hand, when the value of the changed parameter deviates from the reference value (or the reference range), management device 100 determines that the corresponding item needs to be changed.

When it is determined that the corresponding item needs to be changed (YES in sequence SQ10), management device 100 refers to integrated management database 130 to search the approver of the corresponding item (sequence SQ12).

In this way, in response to the generation of the change to the production site, management device 100 searches the item corresponding to the change content that is the content of the change from integrated management database 130, and searches the approver of the searched item (sequences SQ6 to SQ12). In the processing procedure of Fig. 7, the change to the production site includes a change content performed to control device 200 of the production site.

Then, management device 100 notifies approver's information processing device 300 of the details of the change content and the approval request for the change content (sequence SQ14).

Details of the change contents of which the approver is notified include (1) identification information such as equipment ID 1345, (2) a target setting item and a new setting value, and (3) evidence. For example, the evidence may include the actual production including an inspection result in an inspection process when the value deviates from the standard value.

As described above, management device 100 requests the searched approver to approve the reflection of the change content in integrated management database 130 (sequence SQ14).

Information processing device 300 displays the detail of the change content and the approval request for the change content from management device 100 (sequence SQ16), and waits for the operation from the approver.

When the approver approves the approval request (sequence SQ18), information processing device 300 transmits an approval notification to management device 100 (sequence SQ20). Management device 100 changes the corresponding item of integrated management database 130 according to the approval notification (sequence SQ22). In this way, in response to the approval from the approver, management device 100 reflects the change content in the corresponding item of integrated management database 130 (sequence SQ22).

Management device 100 generates a new work instruction sheet 140 based on changed integrated management database 130 as necessary (sequence SQ24). Then, the series of processing ends.

On the other hand, when the approver does not approve the approval request (sequence SQ26), information processing device 300 transmits a disapproval notification to management device 100 (sequence SQ28). In accordance with the disapproval notification from the approver, management device 100 generates the item that is not approved and related information (sequence SQ30), and notifies the engineer who performs the change operation of the item and the related information (sequence SQ32). The engineer reviews the content of the change operation as necessary. Then, the series of processing ends.

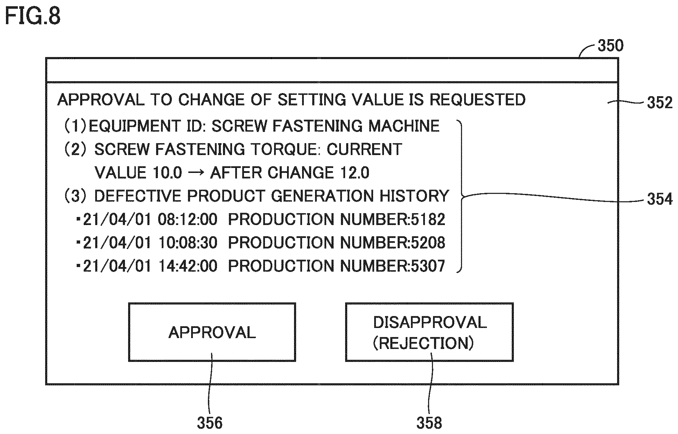

Fig. 8 is a schematic diagram illustrating an example of a user interface screen presented to the approver in information management system 1 of the embodiment. With reference to Fig. 8, a user interface screen 350 is displayed on a display or the like of information processing device 300. More specifically, user interface screen 350 includes a change content 354 for which the approval is requested, in addition to a message 352 indicating that the approval is requested.

After checking the display content of user interface screen 350, the approver selects an approval button 356 in the case of the approval, and selects a disapproval button 358 in the case of the disapproval. Information processing device 300 transmits the approval notification or the disapproval notification to management device 100 according to the button selected by the approver.

In this way, information processing device 300 displays user interface screen 350 in order to receive the approval from the approver. User interface screen 350 includes change contents 354 in which the approval is requested.

With the above processing, the change content by the engineer such as the person in charge of the production technology or the manufacturing manager can be reflected in integrated management database 130.

### (e2: Determination and reflection of change content based on actual production)

A processing example in which the change content is determined based on the actual production while the determined change content is reflected in integrated management database 130 will be described below.

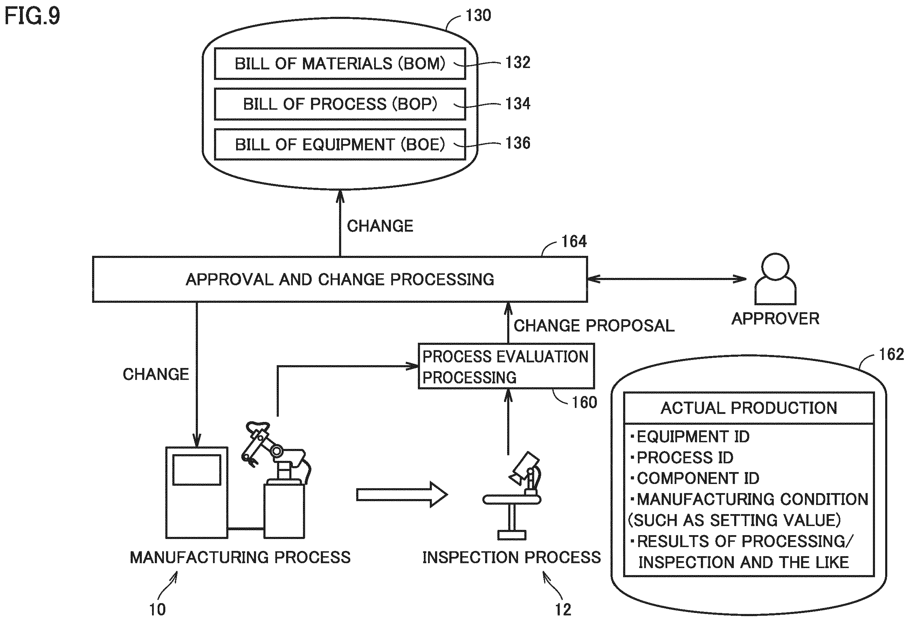

Fig. 9 is a schematic diagram illustrating change processing based on the actual production in information management system 1 of the embodiment. In the example of Fig. 9, information management system 1 manages a line having inspection equipment 12 in charge of an inspection process in addition to production equipment 10 in charge of an assembly process. Process evaluation processing 160 and approval and change processing 164 are executed in information management system 1.

Process evaluation processing 160 includes processing of determining whether the change to integrated management database 130 is required and proposing the change content based on an actual production 162 acquired from production equipment 10 and inspection equipment 12.

For example, actual production 162 includes an equipment ID specifying the target equipment, a process ID specifying the target process, a component ID specifying the target component, a manufacturing condition including the setting value, and a result of machining and inspection.

For example, process evaluation processing 160 includes processing of determining whether the change of the reference value (or the reference range) is required according to the determination whether the inspection result by inspection equipment 12 deviates from the corresponding reference value (or the reference range). Alternatively, process evaluation processing 160 includes processing of using the verification model (verification models 1329, 1349, 1369) included in the design information (design information 1323, 1343, 1363) of bill of materials 132, bill of process 134, and bill of equipment 136 to determine whether actual production 162 deviates to an unacceptable extent from the assumption at the time of design, and determining whether to change the corresponding information.

In this way, management device 100 evaluates whether the setting value included in integrated management database 130 is valid based on the actual production of the production site. Then, the change to be reflected in the production site is generated in response to the evaluation that the setting value included in integrated management database 130 is invalid.

Process evaluation processing 160 also includes processing of determining a recommended value or the like related to the change when it is determined that the change to integrated management database 130 is required.

Approval and change processing 164 includes processing of notifying the approver to be changed of the approval request when it is determined that the change is required by process evaluation processing 160. Furthermore, approval and change processing 164 includes processing of changing the corresponding item of integrated management database 130 and changing the corresponding item (parameter 226) of control device 200 in response to the approval from the approver. Integrated management database 130 and control device 200 are simultaneously changed by approval and change processing 164, so that the production site and integrated management database 130 can be synchronized with each other.

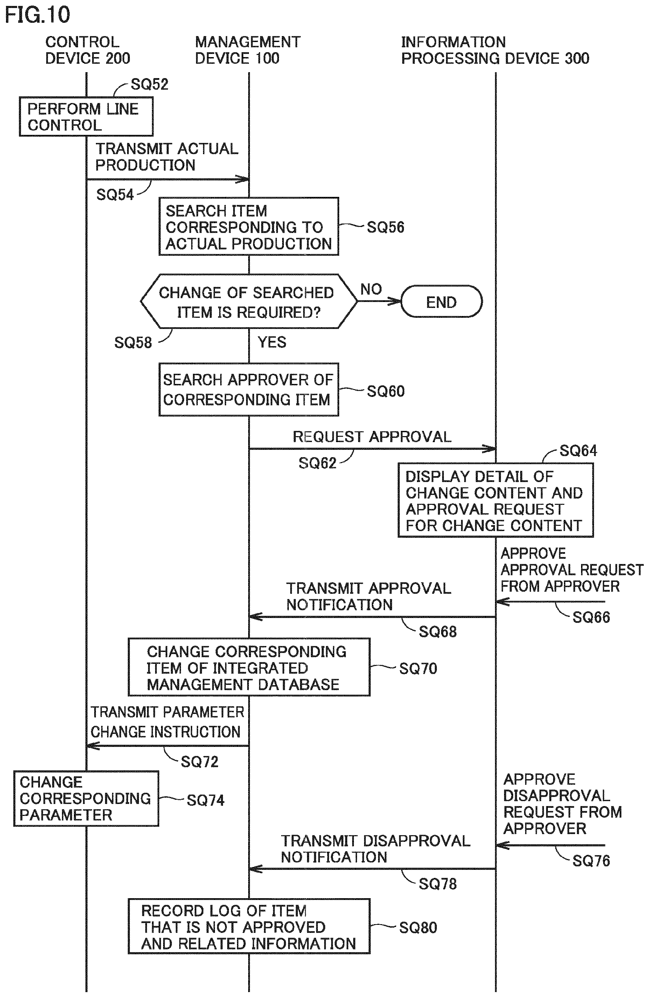

Fig. 10 is a sequence diagram illustrating another example of the processing procedure in information management system 1 of the embodiment. The processing procedure in Fig. 10 is executed by the approver (designer) involved in the change and adjustment in addition to management device 100, control device 200, and information processing device 300.

With reference to Fig. 10, control device 200 performs line control (sequence SQ52). Then, control device 200 transmits actual production 162 to management device 100 (sequence SQ54).

Management device 100 refers to integrated management database 130 to search the item corresponding to actual production 162 transmitted from control device 200 (sequence SQ56). Then, management device 100 determines whether the change of the searched item is required (sequence SQ58).

When determining that the change of the corresponding item is required (YES in sequence SQ58), management device 100 refers to integrated management database 130 to search the approver of the corresponding item (sequence SQ60). As described above, in response to the generation of the change to be reflected in the production site, management device 100 searches the item corresponding to the change content that is the content of the change from integrated management database 130, and searches the approver of the searched item (sequences SQ54 to SQ60).

Then, management device 100 notifies approver's information processing device 300 of the details of the change content and the approval request for the change content (sequence SQ62). That is, management device 100 requests the searched approver to approve the reflection of the change content in integrated management database 130 (sequence SQ62).

Information processing device 300 displays the details of the change content and the approval request for the change content from management device 100 (sequence SQ64), and waits for the operation from the approver.

When the approver approves the approval request (sequence SQ66), information processing device 300 transmits an approval notification to management device 100 (sequence SQ68). Management device 100 changes the corresponding item of integrated management database 130 according to the approval notification (sequence SQ70). In this way, in response to the approval from the approver, management device 100 reflects the change content in the corresponding item of integrated management database 130 (sequence SQ22).

In addition, management device 100 transmits the corresponding parameter change instruction to control device 200 (sequence SQ72). Control device 200 changes the corresponding parameter according to the change instruction from management device 100 (sequence SQ74). Then, the series of processing ends.

On the other hand, when the approver does not approve the approval request (sequence SQ76), information processing device 300 transmits a disapproval notification to management device 100 (sequence SQ78). In response to the disapproval notification from the approver, management device 100 records a log of the item that is not approved and related information (sequence SQ80). In this way, management device 100 may record the log related to the change content in response to the disapproval from the approver. Then, the series of processing ends.

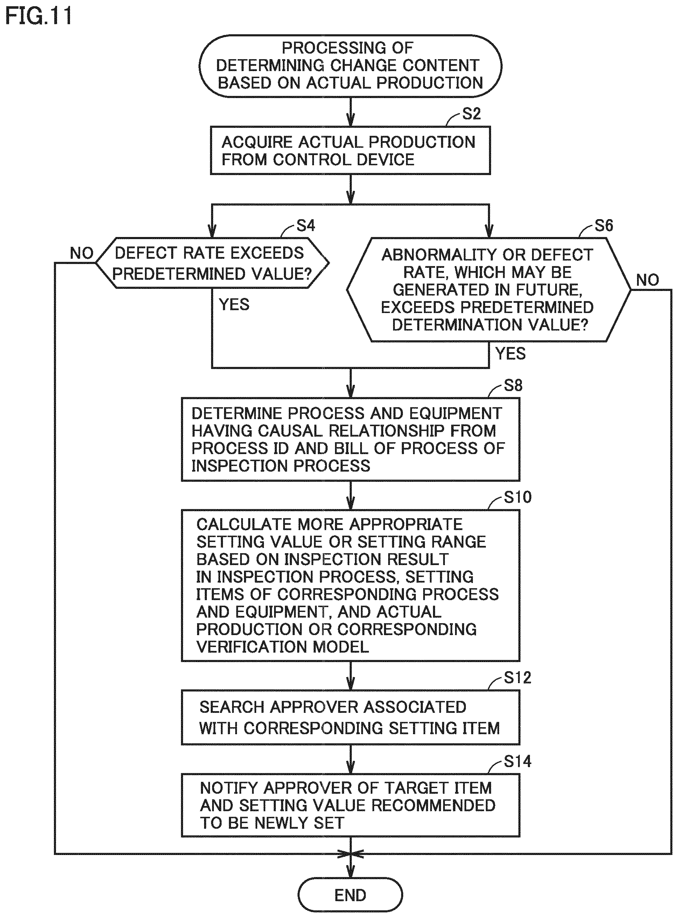

Fig. 11 is a flowchart illustrating an example of the processing content for determining the change content based on the actual production in information management system 1 of the embodiment. With reference to Fig. 11, management device 100 acquires actual production 162 from control device 200 (step S2).

Management device 100 determines whether the defect rate exceeds a predetermined value based on acquired actual production 162 (step S4).

In addition, management device 100 determines whether an abnormality or the defect rate, which may be generated in the future and is predicted based on a tendency appearing in acquired actual production 162, exceeds a predetermined determination value (step S6). The abnormality or defect rate that may be generated in the future can be calculated by abnormality detection or the like. As described above, management device 100 estimates the tendency generated in the production site based on actual production 162 of the production site.

When the defect rate exceeds the predetermined value (YES in step S4), or when the abnormality or the defect rate that may be generated in the future exceeds a predetermined determination value (YES in step S6), management device 100 determines the process and the equipment having a causal relationship from process ID 1341 and bill of process 134 of the inspection process (step S8). For example, management device 100 determines the target process and equipment based on the inspection result included in actual production 162 and the causal relationship defined in bill of process 134.

Subsequently, management device 100 calculates a more appropriate setting value or setting range based on the inspection result in the inspection process, the setting items of the corresponding process and equipment, and actual production 162 or the corresponding verification model (verification models 1329, 1349, 1369) (step S10).

Management device 100 refers to integrated management database 130 to search the approver associated with the corresponding setting item (step S12). Finally, management device 100 notifies the approver of the target item and the setting value (or the setting range) recommended to be newly set (step S14). The content of which the approver is notified may include a simulation result by the verification model.

As described above, the generation of the change to be reflected in the production site may be determined based on the tendency generated in the production site.

### (e3: Determination and reflection of change content based on simulation result)

A processing example in which the change content is determined based on the simulation result while the determined change content is reflected in integrated management database 130 will be described below.

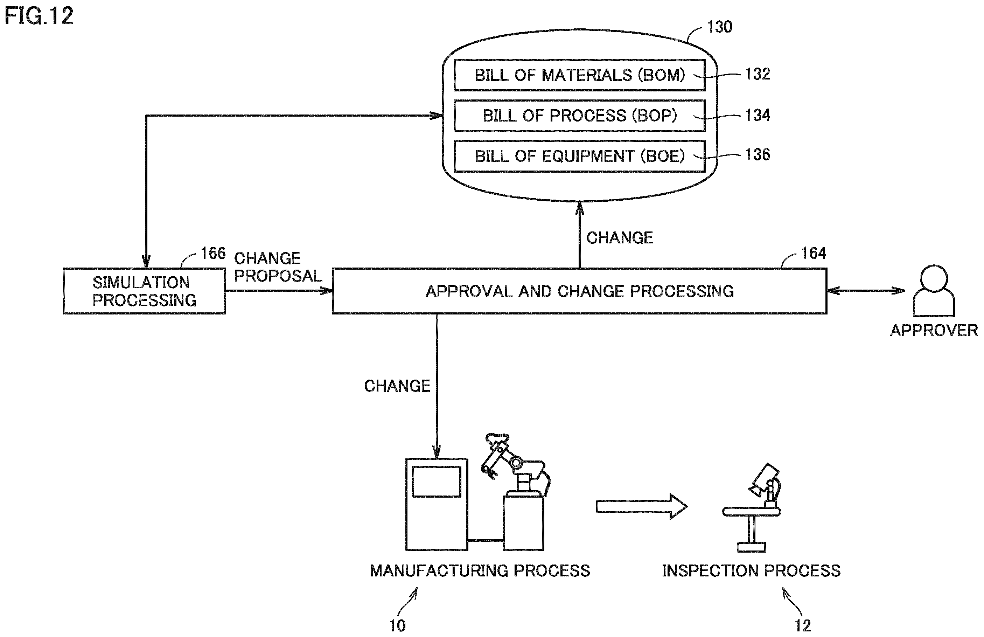

Fig. 12 is a schematic diagram illustrating the change processing based on the simulation result in information management system 1 of the embodiment. In the example of Fig. 12, simulation processing 166 and approval and change processing 164 are executed in information management system 1.

Simulation processing 166 includes processing of evaluating whether the manufacturing conditions including the setting value and the like are valid using the verification model (verification models 1329, 1349, 1369) included in the design information (design information 1323, 1343, 1363) of bill of materials 132, bill of process 134, and bill of equipment 136 of integrated management database 130. Furthermore, simulation processing 166 includes processing of determining whether the change of integrated management database 130 is required, proposing the change content, and the like based on the simulation result and the like.

When simulation processing 166 is executed as pre-verification before operation, production equipment 10 and inspection equipment 12 are not necessarily required.

In simulation processing 166, a verification environment that is an environment implementing the simulation is configured using the verification model and the manufacturing condition (verification condition).

Approval and change processing 164 includes processing of notifying the approver to be changed of the approval request when it is determined that the change is required by simulation processing 166. Furthermore, approval and change processing 164 includes processing of changing the corresponding item of integrated management database 130 and changing the corresponding item (parameter 226) of control device 200 in response to the approval from the approver. Integrated management database 130 and control device 200 are simultaneously changed by approval and change processing 164, so that the production site and integrated management database 130 can be synchronized with each other.

For example, evidence such as a simulation environment (verification environment), a target setting item and a new setting value, and a simulation result is presented to the approver together with the approval request.

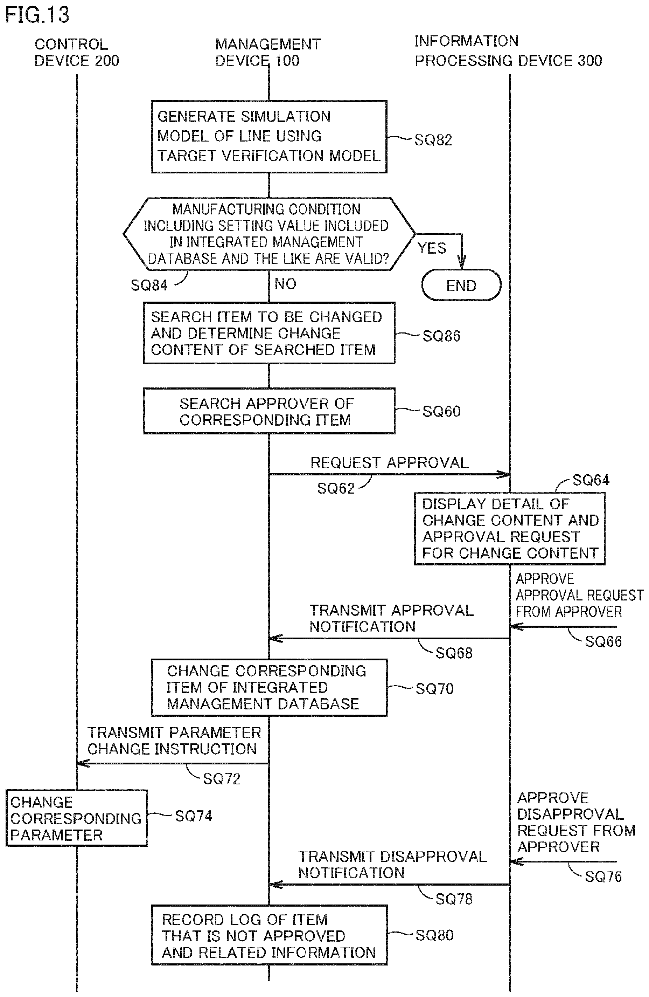

Fig. 13 is a sequence diagram illustrating still another example of the processing procedure in information management system 1 of the embodiment. The processing procedure in Fig. 13 is executed by the approver (designer) involved in the change and adjustment in addition to management device 100, control device 200, and information processing device 300.

With reference to Fig. 13, management device 100 refers to integrated management database 130 to generate a simulation model of the line using the target verification model (sequence SQ82). Based on the simulation result using the generated simulation model, management device 100 evaluates whether the manufacturing condition including the setting value included in integrated management database 130 and the like are valid (sequence SQ84). In this way, management device 100 performs simulation on the production site using the verification model to integrated management database 130.

When the manufacturing condition or the like is invalid (NO in sequence SQ84), management device 100 refers to integrated management database 130 to search the item to be changed and determines the change content of the searched item (sequence SQ86). In this way, the generation of the change to be reflected in the production site is determined based on the simulation result.

Furthermore, management device 100 refers to integrated management database 130 to search the approver of the corresponding item (sequence SQ60).

As described above, in response to the generation of the change to be reflected in the production site, management device 100 searches the item corresponding to the change content that is the content of the change from integrated management database 130, and searches the approver of the searched item (sequences SQ84 to SQ86, SQ60).

Then, management device 100 notifies approver's information processing device 300 of the details of the change content and the approval request for the change content (sequence SQ62). That is, management device 100 requests the searched approver to approve the reflection of the change content in integrated management database 130 (sequence SQ62).

Hereinafter, pieces of processing similar to sequences SQ64 to SQ80 in Fig. 10 are executed. These pieces of processing will not be described again.

### (e4: Determination and reflection of change content based on difference between simulation result and actual production)

A processing example in which the change content is determined based on the difference between the simulation result and the actual production while the determined change content is reflected in integrated management database 130 will be described below.

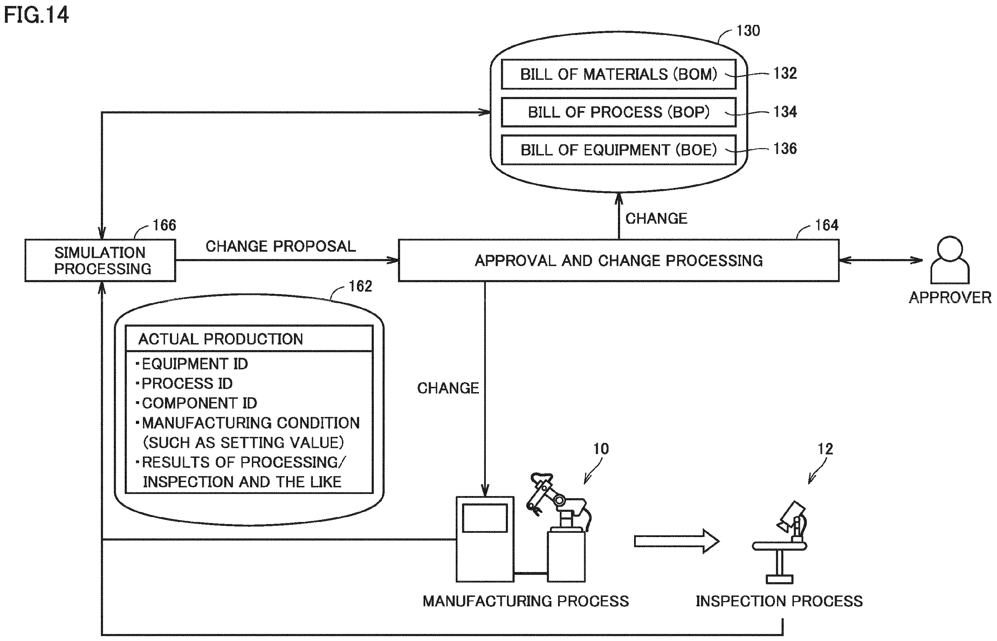

Fig. 14 is a schematic diagram illustrating the change processing based on the difference between the simulation result and the actual production in information management system 1 of the embodiment. In the example of Fig. 14, simulation processing 166 and approval and change processing 164 are executed in information management system 1.

Simulation processing 166 includes processing of performing the simulation using the verification model (verification models 1329, 1349, 1369) included in the design information (design information 1323, 1343, 1363) of bill of materials 132, bill of process 134, and bill of equipment 136 of integrated management database 130. Furthermore, simulation processing 166 includes processing of determining whether the change to integrated management database 130 is required and proposing the change content based on the simulation result and the actual production 162. That is, simulation processing 166 includes processing of determining whether the previous simulation result and actual production 162 deviate to the unacceptable extent, and determining whether the change of the corresponding information is required.

In simulation processing 166, a verification environment that is an environment implementing the simulation is configured using the verification model and the manufacturing condition (verification condition).

Approval and change processing 164 includes processing of notifying the approver to be changed of the approval request when it is determined that the change is required by simulation processing 166. Furthermore, approval and change processing 164 includes processing of changing the corresponding item of integrated management database 130 and changing the corresponding item (parameter 226) of control device 200 in response to the approval from the approver. Integrated management database 130 and control device 200 are simultaneously changed by approval and change processing 164, so that the production site and integrated management database 130 can be synchronized with each other.

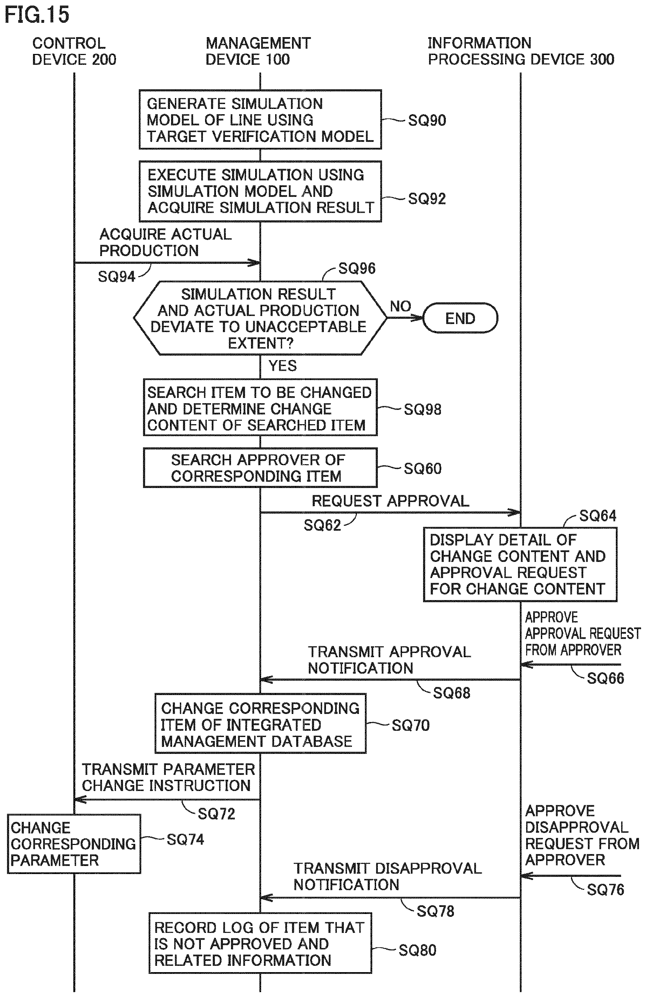

Fig. 15 is a sequence diagram illustrating still another example of the processing procedure in information management system 1 of the embodiment. The processing procedure in Fig. 15 is executed by the approver (designer) involved in the change and adjustment in addition to management device 100, control device 200, and information processing device 300.

With reference to Fig. 15, management device 100 refers to integrated management database 130 to generate a simulation model of the line using the target verification model (sequence SQ90). Management device 100 executes the simulation using the generated simulation model and acquires the simulation result (sequence SQ92). In addition, management device 100 acquires actual production 162 from control device 200 (sequence SQ94).

Subsequently, management device 100 determines whether the simulation result and actual production 162 deviate to the unacceptable extent (sequence SQ96).

When the simulation result and actual production 162 deviate to the unacceptable extent (YES in sequence SQ96), management device 100 refers to integrated management database 130 to search the item to be changed, and determines the change content of the searched item (sequence SQ98). Furthermore, management device 100 refers to integrated management database 130 to search the approver of the corresponding item (sequence SQ60). As described above, in response to the generation of the change to be reflected in the production site, management device 100 searches the item corresponding to the change content that is the content of the change from integrated management database 130, and searches the approver of the searched item (sequences SQ90 to SQ98, SQ60).

Then, management device 100 notifies approver's information processing device 300 of the details of the change content and the approval request for the change content (sequence SQ62). That is, management device 100 requests the searched approver to approve the reflection of the change content in integrated management database 130 (sequence SQ62).

Hereinafter, pieces of processing similar to sequences SQ64 to SQ80 in Fig. 10 are executed. These pieces of processing will not be described again.

### <F. Method for updating integrated management database 130>

**In** information management system 1 of the embodiment, the change to integrated management database 130 is validated after the approver approves the change. For this reason, until the approval or disapproval is determined since the notification of the approval request is made, the change to integrated management database 130 is suspended. Consequently, in addition to integrated management database 130 of an actual system, one or a plurality of integrated management databases 130A of a backup system may be prepared.

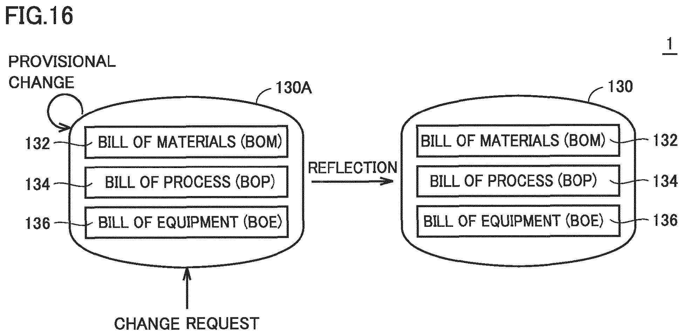

Fig. 16 is a view illustrating an example of a method for updating integrated management database 130 in information management system 1 of the embodiment. With reference to Fig. 16, information management system 1 includes integrated management database 130A of the backup system in addition to integrated management database 130. As described above, in addition to integrated management database 130, integrated management database 130A may be stored as the second integrated management database in storage 120 of management device 100.

When any change request exists, the corresponding change content is reflected in integrated management database 130A (provisional change). Then, when the approval request to the change content is approved, the change content of integrated management database 130A is reflected in integrated management database 130.

When the approval request is not approved, the change to integrated management database 130A is returned to the original state (rolled back). By such processing, the information about integrated management database 130 is not changed without approval.

As illustrated in Fig. 16, management device 100 may reflect the change to the production site or the change to be reflected in the production site in integrated management database 130A of the backup system, and reflect the change to the production site or the change to be reflected in the production site from integrated management database 130A to integrated management database 130 in response to the approval from the approver. The change processing to the information included in integrated management database 130 can be more easily implemented by preparing integrated management database 130A of the backup system.

### <G. Approver>

The processing of searching the approver from the designer (designers 1328, 1348, 1368) described in the design information such as bill of materials 132, bill of process 134, and bill of equipment 136 has been mainly described in the above description.

However, the design process may be hierarchized or may spread over a plurality of approvers. For example, a form in which a plurality of process designs, line designs, equipment and jig designs are hierarchically connected as described above is assumed as the hierarchization of the design process. As a result, the plurality of approvers exist for each hierarchy. In such a case, information about the hierarchical design process may be referred to search one or the plurality of approvers.

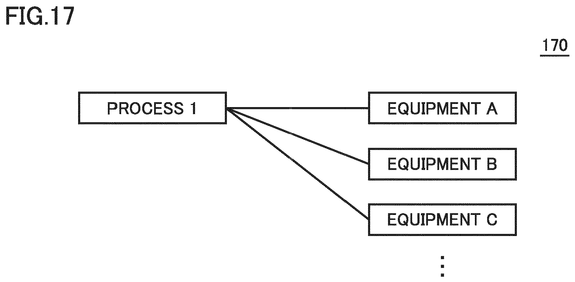

Fig. 17 is a diagram illustrating an example of the method for searching the approver in information management system 1 of the embodiment. With reference to Fig. 17, information management system 1 may further include design hierarchy information 170. Design hierarchy information 170 indicates a hierarchical structure such as the process design, the line design, the equipment and jig design. Design hierarchy information 170 may be stored in management device 100.

In the example of Fig. 17, a plurality of pieces of equipment (equipment A, equipment B, equipment C) are associated with a process 1. For example, when some information is reflected in process 1, not only the approval from the approver for process 1 but also the approval from the approver for each of the plurality of pieces of equipment associated with process 1 may be required.

For this reason, management device 100 can refer to design hierarchy information 170 to specify the hierarchy and the target that require the approval, and can also search one or a plurality of specified target approvers.

Even when the design process is hierarchized, all the related approvers can be searched by referring to such design hierarchy information 170, so that required information can be appropriately and reliably reflected in the design information. In addition, the information about the site obtained from the production site can be reflected in the design information only when the information is approved from the viewpoint of the approver of each hierarchy, so that the information from the site can be appropriately fed back to the design information.

### <H. Advantages>

In the information management system of the embodiment, for example, when the content to be changed is found during construction or operation of the line or the like, or when it is found that the change is required based on the actual production, the future prediction, or the like, the item to which the change should be reflected and the approver for the change are searched, so that the change content can be also easily reflected in the integrated management database. As a result, a situation in which some change is made only to the production site not to reflect the content of the change in the integrated management database can be avoided. That is, according to the information management system of the embodiment, the information about the production site can be more reliably reflected by the information managed in the database.

In addition, in the information management system of the embodiment, the information obtained by an improvement activity performed daily at the production site can be appropriately reflected in the design information. That is, items that cannot be considered during the design, such as (1) deviation from the premise at the time of the design, and (2) 4M (man, machine, material, method) variation that cannot be considered at the time of the design, and the like, can be reflected in the design information.

Although the present invention has been described and illustrated in detail, it is clearly understood that the same is by way of illustration and example only and is not to be taken by way of limitation, the scope of the present invention being interpreted by the terms of the appended claims.

## Claims

1. An information management system comprising:
a storage unit configured to store a database including a bill of materials (BOM) (132), a bill of process (BOP) (134), and a bill of equipment (BOE) (136), each of the bill of materials, the bill of process, and the bill of equipment including designation (1328, 1348, 1368) of an approver for included information;
a search module (20) configured to search an item corresponding to a change content that is a content of a change from the database in response to generation of a change to a production site or generation of a change to be reflected in the production site, and search the approver of the searched item;
an approval request module (30) configured to request the searched approver to approve the reflection of the change content in the database; and
an update module (40) configured to reflect the change content in a corresponding item of the database in response to the approval from the approver.

2. The information management system according to claim 1, wherein the change to the production site includes a change content performed on a control device (200) of the production site.

3. The information management system according to claim 1 or 2, further comprising an evaluation module (SQ84) configured to evaluate whether a setting value included in the database is valid based on actual production of the production site acquired from production equipment (10) in charge of an assembly process and inspection equipment (12) in charge of an inspection process,
wherein the change to be reflected in the production site is generated in response to the evaluation that the setting value included in the database is invalid.

4. The information management system according to any one of claims 1 to 3, further comprising an estimation module (S6) configured to estimate a tendency generated in the production site based on the actual production of the production site,
wherein the generation of the change to be reflected in the production site is determined based on the tendency generated in the production site.

5. The information management system according to any one of claims 1 to 4, further comprising a simulation module (SQ82) configured to perform a simulation of the production site using a model included in the database,
wherein the generation of the change to be reflected in the production site is determined based on a simulation result by the simulation module.

6. The information management system according to any one of claims 1 to 5, wherein the update module (SQ80) records a log related to the change content in response to disapproval from the approver.

7. The information management system according to any one of claims 1 to 6,
wherein
the storage unit stores a second database (130A) in addition to the database, and
the change to the production site or the change to be reflected in the production site is temporarily reflected in the second database, and reflected from the second database to the database in response to the approval from the approver.

8. The information management system according to any one of claims 1 to 7, further comprising a display unit (300) to display a user interface screen (350) in order to receive the approval from the approver,
wherein the user interface screen includes the change content (354) in which the approval is requested.

9. A computer-implemented information management method comprising:
storing a database (130) including a bill of materials (BOM) (132), a bill of process (BOP) (134), and a bill of equipment (BOE) (136) in a storage unit (120), each of the bill of materials, the bill of process, and the bill of equipment including designation (1328, 1348, 1368) of an approver for included information;
searching an item corresponding to a change content that is a content of a change from the database in response to generation of a change to a production site or generation of a change to be reflected in the production site, and search the approver of the searched item (SQ6-SQ12, SQ54-SQ60, SQ84, SQ86);
requesting the searched approver to approve the reflection of the change content in the database (SQ14, SQ62); and
reflecting the change content in a corresponding item of the database in response to the approval from the approver (SQ22, SQ62).

10. An information management program causing a computer (100) to perform an information management method, the computer including a storage unit configured to store a database including a bill of materials (BOM) (132), a bill of process (BOP) (134), and a bill of equipment (BOE) (136), each of the bill of materials, the bill of process, and the bill of equipment including designation (1328, 1348, 1368) of an approver for included information, the information management method comprising:
searching an item corresponding to a change content that is a content of a change from the database in response to generation of a change to a production site or generation of a change to be reflected in the production site, and search the approver of the searched item (SQ6-SQ12, SQ54-SQ60, SQ84, SQ86);
requesting the searched approver to approve the reflection of the change content in the database (SQ14, SQ62); and
reflecting the change content in a corresponding item of the database in response to the approval from the approver (SQ22, SQ62).

## Patentansprüche

1. Informationsverwaltungssystem, umfassend:
eine Speichereinheit, die konfiguriert ist, um eine Datenbank zu speichern, die eine Stückliste (BOM) (132), eine Prozessliste (BOP) (134) und eine Geräteliste (BOE) (136) umfasst, wobei jede aus der Stückliste, der Prozessliste und der Geräteliste eine Benennung (1328, 1348, 1368) eines Genehmigers für enthaltene Informationen beinhaltet;
ein Suchmodul (20), das konfiguriert ist, um ein Element, das einem Änderungsinhalt entspricht, zu suchen, welcher ein Inhalt einer Änderung von der Datenbank ist, als Reaktion auf das Erzeugen einer Änderung an einer Produktionsstätte oder das Erzeugen einer Änderung, die in der Produktionsstätte wiederzugeben ist, und den Genehmiger des gesuchten Elements zu suchen;
ein Genehmigungsaufforderungsmodul (30), das konfiguriert ist, um den gesuchten Genehmiger aufzufordern, die Wiedergabe des Änderungsinhalts in der Datenbank zu genehmigen; und
ein Aktualisierungsmodul (40), das konfiguriert ist, um den Änderungsinhalt in einem entsprechenden Element der Datenbank als Reaktion auf die Genehmigung durch den Genehmiger wiederzugeben.

2. Informationsverwaltungssystem nach Anspruch 1, wobei die Änderung an der Produktionsstätte einen Änderungsinhalt umfasst, der an einer Steuervorrichtung (200) der Produktionsstelle durchgeführt wird.

3. Informationsverwaltungssystem nach Anspruch 1 oder 2, ferner umfassend ein Bewertungsmodul (SQ84), das konfiguriert ist, um zu bewerten, ob ein in der Datenbank enthaltener Einstellwert gültig ist, beruhend auf der tatsächlichen Produktion an der Produktionsstätte, welche durch ein Produktionsgerät (10), das für einen Zusammensetzungsprozess zuständig ist, und ein Überprüfungsgerät (12), das für einen Überprüfungsprozess zuständig ist, erfasst wurde;
wobei die an der Produktionsstätte wiederzugebende Änderung als Reaktion auf die Bewertung, dass der in der Datenbank enthaltene Einstellwert ungültig ist, erzeugt wird.

4. Informationsverwaltungssystem nach einem der Ansprüche 1 bis 3, ferner umfassend ein Schätzungsmodul (S6), das konfiguriert ist, um eine in der Produktionsstelle erzeugte Tendenz beruhend auf der tatsächlichen Produktion an der Produktionsstelle zu schätzen,
wobei das Erzeugen der an der Produktionsstätte wiederzugebenden Änderung beruhend auf der an der Produktionsstätte erzeugten Tendenz bestimmt wird.

5. Informationsverwaltungssystem nach einem der Ansprüche 1 bis 4, ferner umfassend ein Simulationsmodul (SQ82), das konfiguriert ist, um unter Verwendung eines in der Datenbank enthaltenen Moduls eine Simulation der Produktionsstätte durchzuführen,
wobei das Erzeugen der an der Produktionsstätte wiederzugebenden Änderung durch das Simulationsmodul beruhend auf einem Simulationsergebnis bestimmt wird.

6. Informationsverwaltungssystem nach einem der Ansprüche 1 bis 5,
wobei das Aktualisierungsmodul (SQ80) als Reaktion auf eine Nicht-Genehmigung von dem Genehmiger ein mit dem Änderungsinhalt verbundenes Protokoll aufzeichnet.

7. Informationsverwaltungssystem nach einem der Ansprüche 1 bis 6, wobei
die Speichereinheit eine zweite Datenbank (130A) zusätzlich zu der Datenbank speichert und
die Änderung der Produktionsstätte oder die an der Produktionsstätte wiederzugebende Änderung vorübergehend in der zweiten Datenbank wiedergegeben wird und als Reaktion auf die Genehmigung durch den Genehmiger aus der zweiten Datenbank in die Datenbank wiedergegeben wird.

8. Informationsverwaltungssystem nach einem der Ansprüche 1 bis 7, ferner umfassend eine Anzeigeeinheit (300) zum Anzeigen eines Benutzeroberflächenbildschirms (350) zum Empfangen der Genehmigung des Genehmigers,
wobei der Benutzeroberflächenbildschirm den Änderungsinhalt (354), in dem die Genehmigung angefordert wird, umfasst.

9. Computer-implementiertes Informationsverwaltungsverfahren, das Folgendes umfasst:
Speichern einer Datenbank (130), die eine Stückliste (BOM) (132), eine Prozessliste (BOP) (134) und eine Geräteliste (BOE) (136) umfasst, in einer Speichereinheit (120), wobei jede aus der Stückliste, der Prozessliste und der Geräteliste eine Benennung (1328, 1348, 1368) eines Genehmigers für enthaltene Informationen umfasst;
Suchen eines Elements, das einem Änderungsinhalt entspricht, welcher ein Inhalt einer Änderung von der Datenbank ist, als Reaktion auf das Erzeugen einer Änderung einer Produktionsstätte oder das Erzeugen einer Änderung, die in der Produktionsstätte wiederzugeben ist, und Suchen des Genehmigers des gesuchten Elements (SQ6-SQ12, SQ54-SQ60, SQ84, SQ86);
Auffordern des gesuchten Genehmigers, die Wiedergabe des Änderungsinhalts in der Datenbank zu genehmigen (SQ14, SQ62); und
Wiedergeben des Änderungsinhalts in einem entsprechenden Element der Datenbank als Reaktion auf die Genehmigung durch den Genehmiger (SQ22, SQ62).

10. Informationsverwaltungsprogramm, das bewirkt, dass ein Computer (100) ein Informationsverwaltungsverfahren durchführt, wobei der Computer eine Speichereinheit umfasst, die konfiguriert ist, um eine Datenbank zu speichern, die eine Stückliste (BOM) (132), eine Prozessliste (BOP) (134) und eine Geräteliste (BOE) (136) umfasst, wobei jede aus der Stückliste, der Prozessliste und der Geräteliste eine Benennung (1328, 1348, 1368) eines Genehmigers für enthaltene Informationen umfasst, wobei das Informationsverwaltungsverfahren Folgendes umfasst:
Suchen eines Elements, das einem Änderungsinhalt entspricht, welcher ein Inhalt einer Änderung von der Datenbank ist, als Reaktion auf das Erzeugen einer Änderung an einer Produktionsstätte oder das Erzeugen einer Änderung, die in der Produktionsstätte wiederzugeben ist, und Suchen des Genehmigers des gesuchten Elements (SQ6-SQ12, SQ54-SQ60, SQ84, SQ86);
Auffordern des gesuchten Genehmigers, die Wiedergabe des Änderungsinhalts in der Datenbank zu genehmigen (SQ14, SQ62); und
Wiedergeben des Änderungsinhalts in einem entsprechenden Element der Datenbank als Reaktion auf die Genehmigung durch den Genehmiger (SQ22, SQ62).

## Revendications

1. Système de gestion d'informations, comprenant :
une unité de stockage configurée pour stocker une base de données comprenant une liste de matériaux (BOM) (132), une liste de processus (BOP) (134) et une liste d'équipements (BOE) (136), chacune de la liste de matériaux, de la liste de processus et de la liste d'équipements comprenant la désignation (1328, 1348, 1368) d'un approbateur pour les informations incluses ;
un module de recherche (20) configuré pour rechercher un élément correspondant à un contenu de changement qui est un contenu d'un changement à partir de la base de données en réponse à la génération d'un changement d'un site de production ou à la génération d'un changement à refléter dans le site de production, et rechercher l'approbateur de l'élément recherché ;
un module de demande d'approbation (30) configuré pour demander à l'approbateur recherché d'approuver la réflexion du contenu de changement dans la base de données ; et
un module de mise à jour (40) configuré pour refléter le contenu de changement dans un élément correspondant de la base de données en réponse à l'approbation de la part de l'approbateur.

2. Système de gestion d'informations selon la revendication 1, dans lequel le changement du site de production comprend un contenu de changement effectué sur un dispositif de commande (200) du site de production.

3. Système de gestion d'informations selon la revendication 1 ou 2, comprenant en outre un module d'évaluation (SQ84) configuré pour évaluer si une valeur de réglage incluse dans la base de données est valide sur la base de la production réelle du site de production acquise à partir d'un équipement de production (10) en charge d'un processus d'assemblage et d'un équipement d'inspection (12) en charge d'un processus d'inspection,
dans lequel le changement à refléter dans le site de production est généré en réponse à l'évaluation que la valeur de réglage incluse dans la base de données est invalide.

4. Système de gestion d'informations selon l'une quelconque des revendications 1 à 3, comprenant en outre un module d'estimation (S6) configuré pour estimer une tendance générée dans le site de production sur la base de la production réelle du site de production,
dans lequel la génération du changement à refléter dans le site de production est déterminée sur la base de la tendance générée dans le site de production.

5. Système de gestion d'informations selon l'une quelconque des revendications 1 à 4, comprenant en outre un module de simulation (SQ82) configuré pour effectuer une simulation du site de production en utilisant un modèle inclus dans la base de données,
dans lequel la génération du changement à refléter dans le site de production est déterminée sur la base d'un résultat de simulation par le module de simulation.

6. Système de gestion d'informations selon l'une quelconque des revendications 1 à 5, dans lequel le module de mise à jour (SQ80) enregistre un journal lié au contenu du changement en réponse à une désapprobation de l'approbateur.

7. Dispositif de gestion d'informations selon l'une quelconque des revendications 1 à 6, dans lequel
l'unité de stockage stocke une seconde base de données (130A) en plus de la base de données, et
le changement du site de production ou le changement à refléter dans le site de production est reflété temporairement dans la seconde base de données, et reflété de la seconde base de données à la base de données en réponse à l'approbation de l'approbateur.

8. Système de gestion d'informations selon l'une quelconque des revendications 1 à 7, comprenant en outre une unité d'affichage (300) pour afficher un écran d'interface utilisateur (350) afin de recevoir l'approbation de la part de l'approbateur,
dans lequel l'écran d'interface utilisateur inclut le contenu de changement (354) dans lequel l'approbation est demandée.

9. Procédé de gestion d'information mis en œuvre par ordinateur, comprenant les étapes consistant à :
stocker une base de données (130) comprenant une liste de matériaux (BOM) (132), une liste de processus (BOP) (134) et une liste d'équipements (BOE) (136) dans une unité de stockage (120), chacune de la liste de matériaux, de la liste de processus et de la liste d'équipements comprenant une désignation (1328, 1348, 1368) d'un approbateur pour les informations incluses ;
rechercher un élément correspondant à un contenu de changement qui est un contenu d'un changement à partir de la base de données en réponse à la génération d'un changement d'un site de production ou à la génération d'un changement à refléter dans le site de production, et rechercher l'approbateur de l'élément recherché (SQ6-SQ12, SQ54-SQ60, SQ84, SQ86) ;
demander à l'approbateur recherché d'approuver la réflexion du contenu de changement dans la base de données (SQ14, SQ62) ; et
refléter le contenu de changement dans un élément correspondant de la base de données en réponse à l'approbation de la part de l'approbateur (SQ22, SQ62).

10. Programme de gestion d'informations amenant un ordinateur (100) à mettre en œuvre un procédé de gestion d'informations, l'ordinateur comprenant une unité de stockage configurée pour stocker une base de données comprenant une liste de matériaux (BOM) (132), une liste de processus (BOP) (134) et une liste d'équipements (BOE) (136), chacune de la liste de matériaux, de la liste de processus et de la liste d'équipements comprenant une désignation (1328, 1348, 1368) d'un approbateur pour les informations incluses, le procédé de gestion d'informations comprenant les étapes consistant à :
rechercher un élément correspondant à un contenu de changement qui est un contenu d'un changement à partir de la base de données en réponse à la génération d'un changement d'un site de production ou à la génération d'un changement à refléter dans le site de production, et rechercher l'approbateur de l'élément recherché (SQ6-SQ12, SQ54-SQ60, SQ84, SQ86) ;
demander à l'approbateur recherché d'approuver la réflexion du contenu de changement dans la base de données (SQ14, SQ62) ; et
refléter le contenu de changement dans un élément correspondant de la base de données en réponse à l'approbation de la part de l'approbateur (SQ22, SQ62).
